(19) Europäisches Patentamt
European Patent Office
Office européen des brevets

(11) Veröffentlichungsnummer: **0 293 816 A2**

# (12) EUROPÄISCHE PATENTANMELDUNG

(21) Anmeldenummer: **88108663.1**

(51) Int. Cl.4: **H01M 10/40**

(22) Anmeldetag: **31.05.88**

(30) Priorität: **05.06.87 DE 3718883**

(43) Veröffentlichungstag der Anmeldung: **07.12.88 Patentblatt 88/49**

(84) Benannte Vertragsstaaten: **DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

## (54) Elektrochemisches Speicherelement oder sekundäre Batterie.

(57) Die Erfindung betrifft ein elektrochemisches Speicherelement oder eine sekundäre Batterie die Elektroden aus einem elektrochemisch oxidierbaren und/oder reduzierbaren Polymeren mit Stickstoff- oder Schwefelatomen im Polymermolekül und als Elektrolytlösungsmittel bestimmte fünf- oder sechsgliedrige heterocyclische Verbindungen sowie ein Leitsalz enthält.

EP 0 293 816 A2

Xerox Copy Centre

## Elektrochemisches Speicherelement oder sekundäre Batterie

Die Erfindung betrifft elektrochemische Speicherelemente mit mindestens 2 Elektroden und einem Elektrolyten aus einer gelösten oder suspendierten ionischen oder ionisierbaren Verbindung als Leitsalz und einem Elektrolytlösungsmittel, wobei mindestens eine der Elektroden als aktives Elektrodenmaterial ein elektrochemisch, reversibel oxidierbares und/oder reduzierbares Polymeres mit Stickstoff oder Schwefelatomen im Polymermolekül mit einer elektrischen Leitfähigkeit größer als $10^{-2}$ $\Omega^{-1}$ $cm^{-1}$ enthält bzw hieraus besteht.

In der EP-A-36 118 oder EP-A-49 970 werden leichte Batterien hoher Energie- und Leistungsdichte beschrieben, die als elektrodenaktives Material derElektroden eine elektrisch hochleitfähiges, p- oder n-dotiertes konjugiertes Polymer, insbesondere Polyacetylen, enthalten. Die konjugierten Polymeren lassen sich mit den im Elektrolyt enthaltenen ionischen oder ionisierbaren Verbindungen reversibel elektrochemisch dotieren und entdotieren und so in Abhängigkeit von dem Dotierungsgrad in verschiedene Oxidations- und Redutionsstufen überführen. In einer typischen und vorteilhaften Ausführungsform enthalten diese Batterien z.B. eine Lithium-anode und eine Kathode aus n-dotiertem Polyacetylen. Es ist außerdem schon vorgeschlagen worden Polypyrrol, Polythiophen oder Polyanilin als Elektrodenmaterial zu verwenden. Die Elektrolyten enthalten Elektrolytsalze, wie z.B. Lithiumperchlorat oder Lithiumhexafluorophosphat, die in organischen Elektrolytlösungsmitteln gelöst sind. Als Elektrolytlösungsmittel werden insbesondere lineare und cyclische Ether, wie Ethylenglykoldimethylether, festes Polyethylenoxid, Tetrahydrofuran oder Dioxan, aber auch Propylencarbonat, verwendet.

In der älteren deutschen Patentanmeldung P 34 31 134.3 sind elektrochemische Primärelemente vorgeschlagen worden die Elektroden aus Polypyrrol oder Polythiophen und als Elektrolyt eine Lösung von Eisen-, Aluminium- oder Titanhalogeniden im Schwefeldiooxid enthalten.

Es ist bislang noch nicht gelungen, sekundäre Batterien auf Basis elektrisch leitfähiger dotierter konjugierter Polymere herzustellen, die allen von der Praxis an die Batterie gestellten Anforderungen genügen. So haben die Elektrolyte in diesen Batterien vielfach eine ungenügende thermische Stabilität oder ungenügende Stabilität gegenüber Basen oder nukleophilen Verbindungen. Auch haben die bislang verwendeten Elektrolytlösungsmittel ein nicht immer ausreichendes Lösungsvermögen für Leitsalze.

Aufgabe der vorliegenden Erfindung war es, elektrochemische Speicherelemente oder sekundäre Batterien mit mindestens einer Elektrode auf Basis von elektrisch leitfähigen, elektrochemisch oxidierbaren und/oder reduzierbaren Polymeren mit Stickstoff- oder Schwefelatomen im Polymermolekül aufzuzeigen, die ein Elektrolytlösungsmittel mit einer hohen Löslichkeit für Leitsalze enthalten, das eine hohe thermische Stabilität hat und stabil gegenüber Basen und nukleophilen Verbindungen ist.

Es wurde nun gefunden, daß diese Aufgabe gelöst wird, wenn bei den elektrochemischen Speicherlementen oder sekundären Batterien der eingangs genannten Art das Elektrolytlösungsmittel eine fünf- oder sechsgliedrige heterocyclische Verbindung ist, die eine Gruppierung der allgemeinen Formel enthält

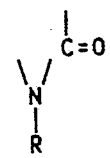

worin R ein Alkylrest ist mit 1 bis 6 Kohlenstoffatomen.

Gegenstand der Erfindung sind desweiteren spezielle Ausgestaltungsformen dieser elektrochemischen Speicherelemente oder Batterie entsprechend der nachfolgenden detaillierten Beschreibung.

Die erfindungsgemäßen elektrochemischen Speicherelemente und sekundäre Batterien zeigen somit im Vergleich zu entsprechenden bekannten Batterien nicht nur eine verbesserte Energie- und Leistungsdichte, sondern es ist auch eine Stromentnahme möglich. Trotz möglicher dichterer Packung der Elektroden zeigen die erfindungsgemäßen elektrochemischen Zellen und Batterien geringere Strom- und Spannungsverluste. Darüber hinaus ist die Selbstentladung, insbesondere im Vergleich mit entsprechenden bekannten Batterien dieser Art, deutlich vermindert, so daß die erfindungsgemäßen elektrochemischen Elemente oder Batterien eine verbesserte Lagerstabilität besitzen. Ferner lassen sich die erfindungsgemäßen elektrochemischen Elemente und Batterien wiederuafladen, erlauben hohe Cyklenzahlen und besitzen eine große Cyklenstabilität.

Unter den elektrochemisch oxidierbaren und/oder reduzierbaren Polymeren haben sich insbesondere auch die Polymeren der Verbindungen aus der Klasse der 5-gliedrigen heterocyclischen Verbindungen mit konjugiertem $\pi$-Elektronensystem, die Stickstoff oder Schwefel als Heteroatom enthalten, sehr vorteilhaft als Elektrodenmaterial erwiesen.

Derartige Verbindungen aus der Klasse der 5-gliedrigen heterocyclischen Verbindungen sind im Rahmen dieser Erfindung Verbindungen aus der Klasse der Pyrrole und der Thiophene.

Verbindungen aus der Klasse der Pyrrole sind das unsubstituierte Pyrrol selbser als auch die substituierten Pyrrole, wie die N-Alkylpyrrole, N-Arylpyrrole, die an den C-Atomen monoalkyl- oder dihalogensubstituierten Pyrrole und die an den C-Atomen monohalogen- oder dihalogensubstituierten Pyrrole. Bei der Herstellung der erfindungsgemäßen Copolymeren können die Pyrrole allein oder in Mischung miteinander eingesetzt werden, so daß die Copolymere ein oder mehrere verschiedene Pyrrole eingebaut enthaltenkönnen. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, bevorzugt.

Verbindungen aus der Klasse der Thiophene sind das unsubstituierte Thiophenen selbst, das 2-, oder 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene. Ebenso kommen Phenylthiophene, wie 2-Phenylthiophen oder das 3-Benzylthiophen in Frage.

Die obengenannten 5-gliedrigen heterocyclischen Verbindungen mit konjugiertem $\pi$-Elektronensystem können aber auch mit bis zu 20 Gew.-% anderen, mit diesen Verbindungen copolymerisierbaren Verbindungen copolymerisiert werden. Solche Verbindungen sind z.B. das Thiazol. das Oxazol, das Imidazol. Weiterhin kommen als Comonomere Aminophenanthren, Diaminocarbazol, Semidin, Aminocarbazol sowieAnilin und/oder p-Phenylendiamin in Frage.

Zur Herstellung der Homo- und Copolymeren der Verbindungen aus der Klasse der 5-gliedrigen Heterocyclen können die Monomeren, das sind die Pyrrole oder Thiophene und gegebenenfalls die Comonomeren, in einem Elektrolytlösungsmittel in Gegenwart eines geeigneten Leitsalzes anodisch oxidiert und dabei polymerisiert werden.

Ein geeignetes Polymeres das Stickstoffatome im Polymermolekül enthält ist Polyanilin. Man versteht darunter Oxidationsprodukte von aromatischen Aminen die am Ring oder Stickstoff subnstituiert sein können. Geeignet sind z.B. Oxidationsprodukte von Anilin, Toluidin, Xylidin, Naphtylamin oder Aminoanthracen. Die Oxidationsreaktion bewirkt eine Bindung zwischen dem Stickstoffatom und C-Atomen des Ringes. Die Eignung solcher Polyaniline als Elektrodenmaterial ist beispielsweise in der GB-PS 1 216 549 und in Chim.Macromol. 1, S. 469 (1970) beschrieben. Zur Herstellung von Polyanilinen kann man beispielsweise Anilin in Gegenwart eines Leitsalzes elektrochemisch polymerisieren (nach Mohilner et al., J.A.Chem.Soc. 84, S. 3618 (1962). Mann kann aber auch Anilin chemisch, z.B. in wäßriger Lösung in Gegenwart eines Leitsalzes mit Ammoniumsulfat oxidieren.

Die elektrisch leitfähigen, elektrochemisch oxidierbaren und/oder reduzierbaren Polymeren können in jeder beliebigen geeigneten Form als aktives Elektrodenmaterial in den Elektroden eingesetzt werden. Beispielsweise ist es möglich, diese Polymeren in Form von selbsttragenden Filmen oder Folien oder von geschäumten offenzelligen Formkörpern oder Schaumstoffen zu verwenden. Dies empfiehlt sich z.B. insbesondere dann, wenn diese Polymeren stabile, feste, selbsttragende Filme oder Folien zu bilden vermögen. In diesem Fall besteht die betreffende Elektrode aus den elektrisch leitfähigen, elektrochemisch oxidierbaren und/oder reduzierbaren Polymeren.

Gleichermaßen können die Polymeren zum Einsatz als Elektrodenmaterial auf ein Substrat aufgebracht werden, beispielsweise indem man Filme oder Folien dieser Polymeren auf das Substrat auflaminiert oder aufkaschiert oder indem man das Substrat mit dem Polymeren pulverbeschichtet. Als Substrate können dabei einerseits inerte, indifferente Trägermaterialien dienen, z.B. Filme oder Folien aus üblichen, unter den Betriebsbedingungen des elektrochemischen Elements oder der Batterie stabilen Polymeren, insbesondere auch Gewebe, Vliese etc. aus organischen oder anorganischen, elektrisch nicht-leitenden Materialien, z.B. Vliese aus Glaswolle oder dergleichen, die gleichzeitig als Separatoren oder Diaphragmen dienen können.

Ferner können die elektrisch leitfähigen, elektrochemisch oxidierbaren und/oder reduzierbaren Polymeren zur Herstellung der Elektroden in Form von gesinterten oder verpreßten Pulvern, beispielsweise als Sinter- oder Preßplättchen, eingesetzt werden. Bei der Herstellung von Preß- oder Sinterelektroden können die hierbei üblichen und gebräuchlichen Zusatzstoffe mitverwendet werden, wie z.B. Bindemittel, Pigmente, Ruß, inerte Metalle oder Träger- oder Matrixmaterialien, wie z.B. andere polymere Stoffe. Diese Zusatzstoffe sind in den Elektrodenmaterialien im allgemeinen in Mengen unter 50 Gew.-%, bezogen auf die gesamte Elektrode, enthalten, wobei für die Elektrodenherstellung vorzugsweise ohne diese Zusatzstoffe gearbeitet wird. Es ist auch möglich, die elektrisch leitfähigen, elektrochemisch oxidierbaren und/oder reduzierbaren Polymeren in Netz- oder Kobelektroden einzusetzen.

Die erfindungsgemäß zu verwendenden Elektrolytlösungsmittel sind fünf-oder sechsgliedrige heterocyclische Verbindungen, die eine Gruppierung der obengenannten allgemeinen Formel enthalten. Besonders geeignet sind 1,5,5-Trimethylpyrrolidon-2 und 1,3-Dimethylimidazolidon-2.

Als Leitsalze für die genannten Elektrolyten kommen die für elektrochemische Zellen oder Batterien der in Rede stehenden Art bekannten und der Literatur beschriebene ionische oder ionisierbare Verbindungen der Alkali- oder Erdalkalimetalle in Betracht. Hierzu gehören insbesondere die Salze mit Perchlorat-, Tetrafluorborat-, Hexafluoroarsenat-, Hexafluoroantomonat oder Hexafluorphosphat-Anionen. Desweiteren gut geeignet sind Salze von Sulfonsäuren, insbesondere von gegebenenfalls mit Alkyl- und/oder Nitrogruppen substituierten aromatischen Sulfonsäuren, insbesondere Benzolsulfonate oder Tosylate, aber auch Fluorosulfonate, wie z.B. Trifluormethansulfonat. Als Kationen für die Leitsalze kommen insbesondere die Alkalimetall-Kationen, vorzugsweise $Li^+$, $Na^+$ oder $K^+$ in Betracht. Weitere sehr gute geeignete Kationen für die Leitsalze sind auch Erdalkalisalze und Tetraalkammoniumionen, vorzugsweise Tetraalkylammoniumionen, vorzugsweise Tetrabutylammonium, Tetraethylammonium oder Tetramethylammonium. Die Leitsalze sind in dem Elektrolytlösungsmittel im allgemeinen in Mengen von etwa 0,01 bis 3 Mol pro Liter Elektrolytlösungsmittel enthalten. Es können auch noch höhere Leitsalzkonzentrationen angewendet werden, da die Elektrosalzlösungsmittel ein besonders hohes Lösungsvermögen für Leitsalze haben. Bei den höheren Leitsalzkonzentrationen liegt der Elektrolyt als Paste vor, mit der die Elektroden bestrichen werden.

Wenn die negative Elektrode in den erfindungsgemäßen elektrochemischen Speicherelementen oder sekundären Batterien, wie weiter unten näher ausgeführt wird, aus einem Metall mit hohem Oxidationspotential, insbesondere einem Alkalimetall besteht, ist vorzugsweise das Leitsalz ein Salz des die negative Elektrode bildenden Metalls. Enthalten beispielsweise die Sekundärelemente als negative Elektrode Lithium-Metall oder Lithium-Legierungen, so werden als Leitsalze insbesondere Lithiumsalze, vorzugsweise das Perchlorat, Tetrafluoroborat, Hexafluorosenat, Hexafluoroantimonat, eingesetzt. Der Elektrolyt der elektrochemischen Elemente oder Batterien kann ein oder auch mehrere Leitsalze in Mischung miteinander enthalten. Zu den geeigneten und bevorzugten Leitsalzen für die erfindungsgemäßen elektrochemischen Zellen oder Batterien gehören unter anderem: Tetrabutylamminiumhexafluorophosphat, $LiPF_6$, $LiClO_4$ oder $LiBF_4$.

Die erfindungsgemäßen elektrochemischen Speicherelemente oder sekundären Batterien können in einer außerordentlich großen Vielfalt von Formen hergestellt werden. Aufgrund des erfindungsgemäß einzusetzenden Elektrolyt-Lösungsmittels können die Elektroden der elektrochemischen Zellen oder Batterien sehr dicht gepackt werden, wodurch insbesondere der Bauz von sehr kleinen, dünnen, leichten als auch flexiblen Batterien begünstigt wird. In den erfindungsgemäßen elektrochemischen Speicherelementen oder Batterien können Anode und Kathode auch durch Diaphragmen oder Separatoren, wie z.B. Filterpapier, Glasfritten, pörose keramische Werkstoffe oder poröse bzw. semipermeable polymere Materialien voneinander getrennt sein. Der Zusammenbau der Batterien kann in geladenem oder ungeladenem Zustand erfolgen.

Die erfindungsgemäßen elektrochemischen Speicherelemente oder sekundären Batterien zeichnen sich neben ihrem geringen Gewicht und ihrer hohen Energie- und Leistungsdichte, insbesondere durch ihre große Stabilität, hohe Zyklisierbarkeit und geringe Selbstentladung aus. Die Batterien sind als Sekundärelement verwendbar, wobei ihre Eigenschaften selbst nach einer sehr hoehen Anzahl von Wiederaufladevorgängen im wesentlichen unverändert und konstant sind. Erfindungsgemäße Batterien zeichnen sich durch eine geringe Selbstentladung aus, so daß deren Kapazität über einen längeren Zeitraum erhalten bleibt.

Beispiel 1

Es wurde ein elektrochemisches Speicherelement gebaut, indem in einen Zellenkörper aus Polymethylmethacrylat, welcher als Elektrolyt eine 0,5-molare Lösung von $LiClO_4$ in 1,5,5-Trimethylpyrrolidon-2 enthielt als positive Elektrode und als negative Elektrode je ein 1 $cm^2$ großer hochleitfähige Polyacetylen-Film in undotiertem Zustand eingetaucht wurden. Nach luftdichtem Versiegeln des Zellenkörpers wurde zum Aufladen des elektrochemischen Speicherelementes eine Spannung von 6 Volt angelegt. Hierbei wurde der Polyacetylen-Film der positiven Elektrode durch die Clorationen p-dotiert; der Polyacetylen-Film der negativen Elektrode wurde mit $Li^+$-Ionen n-dotiert. Nach dem Aufladevorgang wies das elektrochemische Speicherelement eine Ausgangsspannung von 3,4 Volt und einen Ausgangsstrom von 100 mA auf.

Beispiel 2

Es wurde wie in Beispiel 1 gearbeitet, diesmal jedoch als positive Elektrode ein Polypyrrol-Film, als negative Elektrode eine Lithiumfolie mit einer Dicke von 100 µm und als Elektrolyt eine 2 molare Lösung von $LiClO_4$ in 1,3-Dimethylimidazolinon-2 eingesetzt. Bei einer Beladespannung von 6 Volt und einer Entladespannung von 2,7 Volt konnten 300 Zyklen bei einem Ladeverlust unter 10 % gefahren werden.

Beispiel 3

Es wurde wie im Beispiel 1 beschrieben gearbeitet, jedoch als positive Elektrode ein mit Jod dotiertes Polypyrrolidon mit einem Jodgehalt von 17 Gew.-% und einer Leitfähigkeit von $10^{-2}$ S/cm verwendet. Als negative Elektrode diente Lithium. Die Elektroden hatten eine Fläche von 1 $cm^2$. Nach der Aufladung zeigt das Element eine Spannung von 3,2 Volt. Nach 300 Zyklen hatte sich ein Lithiumverlust von nur 10 % eingestellt.

## Ansprüche

Elektrochemische Speicherelemente oder sekundäre Batterien, enthaltend mindestens 2 Elektroden sowie als Elektrolyten eine Lösung oder Suspension einer ionischen oder ionisierbaren Verbindung als Leitsalz in einem Elektrolyt-Lösungsmittel, wobei mindestens eine der Elektroden als aktives Elektrodenmaterial ein elektrochemisch oxidierbares und/oder reduzierbares Polymeres mit Stickstoff- oder Schwefelatomen im Polymermolekül enthält, welches im oxidierten und/oder reduzierten Zustand eine elektrische Leitfähigkeit gößer $10^{-2}$ $Q^{-1}$ besitzt, dadurch gekennzeichnet, daß das Elektrolytlösungsmittel eine fünf- oder sechsgliedrige heterocyclische Verbindung ist die eine Gruppierung der allgemeinen Formel enthält

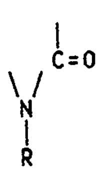

worin R ein Alkylrest ist mit 1 bis 6 Kohlenstoffatomen.